# EUROPÄISCHE PATENTSCHRIFT

(11) **EP 1 078 193 B1**
(45) Veröffentlichungstag und Bekanntmachung des Hinweises auf die Patenterteilung: **31.10.2001**
(21) Anmeldenummer: 99924972.5
(22) Anmeldetag: 14.05.1999
(51) Int. Cl.: F16L 37/12, F16L 55/10

(54) **KUPPLUNG MIT ABREISSSICHERUNG**
COUPLING HAVING MEANS WHICH PREVENT SEPARATION
DISPOSITIF D'ACCOUPLEMENT A SECURITE ANTI-ARRACHEMENT

(30) Priorität: 14.05.1998 DE 29808654 U
(43) Veröffentlichungstag der Anmeldung: 28.02.2001
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: EP9903326
(87) Internationale Veröffentlichungsnummer: WO9958893

(56) Entgegenhaltungen:
- EP-A- 0 123 328
- FR-A- 2 601 518
- US-A- 3 454 047
- US-A- 5 564 471

## Beschreibung

Die Erfindung betrifft eine Kupplung für die Übertragung von gasförmigen und/oder flüssigen Fluiden, insbesondere zum Betanken von Kraftfahrzeugen, wie sie beispielsweise aus der US-A-5 564 471 bekannt ist.

Mit derartigen Kupplungen soll insbesondere eine sichere und schnell anschließbare Steckverbindung zum Übertragen eines Fluids von einer Druckquelle, beispielsweise von einer Betankungsanlage aus erreicht werden. Wichtig ist hierbei die sichere Bedienung der Anschlußkupplung, so daß auch bei hohen Drücken eine problemlose Handhabung ermöglicht wird.

Eine derartige Anschlußkupplung ist in der EP-A-0 340 879 des Anmelders beschrieben, wobei die Anschlußkupplung ein Gehäuse mit einem Fluideinlaß und einem Fluidauslaß aufweist, sowie mehrere Ventile vorgesehen sind, um eine sichere Abdichtung der Kupplung bis zur vollständigen Herstellung der Verbindung zu gewährleisten. Diese Ventile werden dabei nach Ansetzen der Anschlußkupplung in einer bestimmten vorgegebenen Reihenfolge geschaltet, wobei zuerst durch das Aufschieben der Anschlußkupplung an einen Anschlußnippel das Auslaßventil geöffnet wird, dann bei weiterer Bewegung eines Exzenter-Steuerungshebels die Spannzangen geschlossen werden und schließlich das Einlaßventil geöffnet wird. Der Steuerungshebel ist hierbei über eine Exzenterwelle mit der Schiebehülse für die Verriegelung der Spannzangen und mit einem zentralen Dichtkolben in Eingriff, der den Fluideinlaß nach erfolgtem Anschluß der Steckkupplung freigibt. Hierdurch wird eine sichere Anschlußmöglichkeit geschaffen, da die Spannzangen dieser Kupplung in Anschlußstellung formschlüssig verriegelt sind.

Aus der WO-A-93/20378 des Anmelders ist weiterhin ein ähnlicher Schnellanschluß bekannt, wobei im Bereich des Auslasses spannzangen mit einem Eingriffprofil als bevorzugte Verriegelungselemente vorgesehen sind. Hierbei ist auch ein in dem Kupplungsgehäuse verschiebbarer, hohler Dichtkolben beschrieben, der über eine mit einer Schiebehülse verbundenen Betätigungseinrichtung für das Schließen bzw. Öffnen der Spannzangen gekoppelt ist. Auch hier ist aus Sicherheitsgründen ein Betätigen der Betätigungseinrichtung in Form eines Exzenterhebels erforderlich, um die Verriegelung des Schnellanschlusses lösen zu können.

Derartige Anschlußkupplungen haben sich aufgrund der hohen Sicherheit bei der Gasbetankung von Fahrzeugen bewährt. Infolge der zunehmenden Verbreitung der Gasfahrzeuge wird jedoch nicht nur eine Betankung durch qualifiziertes Tankstellenpersonal, sondern auch durch den Fahrer selbst durchgeführt. Hierbei ist von Unfällen berichtet worden, bei denen der Fahrer vergessen hatte, die Anschlußkupplung zu lösen und somit bei angeschlossener Gasleitung von der Tankstelle wegfahren wollte. Dabei wurde meist die unter Druck stehende Gasleitung aus der Verankerung gerissen, wodurch erheblicher Schaden, auch am Fahrzeug entstehen kann. Zudem können trotz entsprechender Sicherheitsventile erhebliche Fluidmengen austreten.

Demzufolge liegt der Erfindung die Aufgabe zugrunde, eine Kupplung mit Abreißsicherung zu schaffen, so daß bei derartigen Vorkommnissen Gefahren bzw. Schäden vermieden werden.

Diese Aufgabe wird gelöst durch eine Kupplung gemäß den Merkmalen des Anspruches 1. Bevorzugte Weiterbildungen der Erfindung sind Gegenstand der Unteransprüche.

Die vorgeschlagene Kupplung zeichnet sich durch eine besonders hohe Sicherheit aus, da eine definierte Trennung der Leitungen bzw. des Anschlusses auch bei hohen Anschlußdrücken erreicht wird, so daß Gefährdungen bzw. Beschädigungen ausgeschlossen werden können. Insbesondere für die bevorzugte Ausführungsform zur Betankung von Kraftfahrzeugen wird mit der vorgeschlagenen Abreißsicherung beim Abreißen bzw. Lösen der Anschlußkupplung sicher vermieden, daß das Gas oder Flüssigkeit austreten kann. Dies ist insbesondere aus Unfallschutzgründen wichtig, aber auch zum Umweltschutz, da selbst bei Abreißkupplungen an der "Zapfsäule" noch ein erhebliches Gasvolumen verloren gehen kann, das sich im Schlauch zwischen der Befüllstation und der Anschlußkupplung befindet und entweichen kann.

Es sei darauf hingewiesen, daß sich die vorgeschlagene Anreißsicherung insbesondere für Anschlußkupplung für verschiedene Anschlüsse eignet, insbesondere für Anschlußnippel zur Fahrzeugbetankung. Durch den kompakten Aufbau kann die Abreißsicherung auch als Zwischen-Kupplung in einem Schlauch oder einer Zuleitung eingesetzt sein, beispielsweise auch am "Zapfsäulen-Ende". Durch den im Gehäuse verschiebbaren Kolben wird hierbei im Normalfall der Anschlußstellung ein sicherer Eingriff der Verriegelungselemente, insbes. der Spannzangen sichergestellt, während selbst im Ausnahmefall des Abreißens mit definierter Freigabe der Spannzangen die Dichtheit durch das automatische Verschließen des Auslaßventils gewährleistet ist. Dabei kann die Abreißsicherung relativ einfach aufgebaut sein, so daß Beschädigungen sowohl leitungs- bzw. kupplungs- als auch nippelseitig sicher vermieden werden.

Von besonderer Bedeutung ist die Einstellbarkeit der Freigabekräfte dieser Kupplung mittels einer Feder, insbesondere einer Druckfeder in Verbindung mit entsprechender Dimensionierung von Kolben-Ringflachen in einer Ringkammer, so daß auf einfache Weise eine sichere und schnelle Voreinstellung der Abreißkraft der Kupplung an die jeweiligen Bedingungen ermöglicht wird.

Nachfolgend wird ein Ausführungsbeispiel anhand der beiliegenden Zeichnungen näher erläutert und beschrieben. Hierin zeigen:
- Fig. 1: eine Seitenansicht einer bevorzugten Kupplung für einen Anschlußnippel mit einem Anschlußprofil, wobei die Kupplung im Längs-Halbschnitt und in ihrer Anschlußstellung dargestellt ist: und
- Fig. 2: eine Vorderansicht auf den Anschlußnippel.

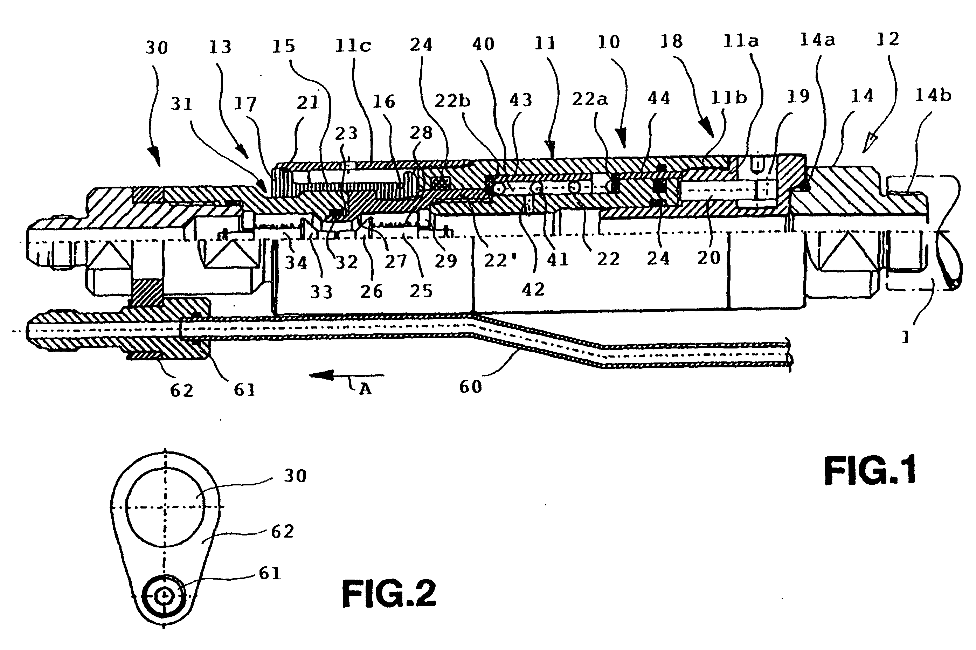

In Fig. 1 ist ein bevorzugtes Ausführungsbeispiel einer Anschluß-Kupplung 10 mit Anschlußrichtung A an einen Anschlußnippel 30 gezeigt. Die Anschlußkupplung 10 weist ein rohrförmiges, hier dreiteiliges Gehäuse 11 auf, wobei die rechte Stirnseite als Einlaß 12 dient und die linke Stirnseite als Auslaß 13 für die Weiterleitung des zu übertragenden Fluids an den Anschlußnippel 30. Der Einlaß 12 zu dem Gehäuse 11 weist einen Anschlußadapter 14 auf, der über eine Dichtung 14a gegen das Gehäuse 11 (genauer: dem Gehäuseteil 11a) abgedichtet ist. Der Anschlußadapter 14 weist an seinem hier rechten Ende zudem ein Gewinde 14b auf, an das ein Schlauch 1 (oder auch eine Rohrleitung) zur Zuführung des zu übertragenden Fluids angeschlossen ist. Der Anschlußadapter 14 kann hierbei in Anpassung an das zu übertragende Fluid, insbesondere an die jeweils gewünschten Zuführwinkel, Durchlaßquerschnitte usw. beispielsweise auch gekröpft gestaltet sein.

Auf der dem Anschlußadapter 14 gegenüberliegenden Stirnseite, hier dem Auslaß 13 sind mehrere, in Rohrform angeordnete, längliche Spannzangen als Verriegelungselemente 15 vorgesehen, die vor dem Aufstecken auf den Anschlußnippel 30 radial nach außen aufgespreizt sind, wie dies beispielsweise auch in der vorstehend genannten WO-A-93/20378 dargestellt ist. Die länglichen Spannzangen als bevorzugte Ausführung eines Verrigelungselemnts 15, von denen wenigstens drei, im allgemeinen sechs Spannzangen vorgesehen sind, sind an ihrem hier rechten Ende an einer Ringnut eines Kolbenaufsatzes 22' eingehängt und dabei durch eine Ringfeder 16 vorgespannt, so daß die Spannzangen radial nach außen aufgespreizt werden können. An dem hier linken Ende an der nach innen abgekröpftem Fläche weisen die Spannzangen jeweils korrespondierend zu dem jeweiligen Anschlußprofil 31 des Anschlußnippels 30 ausgebildete formschlüssige Eingriffsprofile 17 auf. An deren Außenseite sind geneigte Schrägflächen 21 vorgesehen, die den Abreißvorgang nach Erreichen der vorbestimmten Abreißkraft erleichtern, wie weiter unten beschrieben.

Um die Spannzangen herum ist eine äußere Verriegelungshülse 11c vorgesehen, die mit dem Mittelteil 11b des zylindrischen Gehäuses 11 verschraubt ist und letzteres wiederum mit dem Gehäuseteil 11a des Gehäuses 11, an dem der Anschlußadapter 14 befestigt ist, sowie eine Betätigungsvorrichtung 18 gelagert ist. Die Betätigungsvorrichtung 18 weist einen an sich bekannten Exzenter 19 und einen Stößel 20 auf, der einen Kolben 22 (zusammen mit seinem zugehörigen Kolbenaufsatz 22') in Richtung des Anschlußnippels 30 zur Herstellung des Dichtanschlusses vorschieben kann.

An der zum Auslaß 13 hin gelegenen inneren Umfangsfläche des Mittelteils 11b des Gehäuses 11 ist der Kolben 22 mit seinem Kolbenaufsatz 22' geführt, der an seiner vorderen Stirnseite einen abgestuften Dichtbund 23 zur Anlage an einer Dichtung 32 des Anschlußnippels 30 aufweist. Der hier aus Montagegründen zweiteilige, jedoch zugfest verschraubte Kolben 22 mit seinem Kolbenaufsatz 22' ist gegenüber den Spannzangen und der Betätigungsvorrichtung 18 durch am Mittelteil 11b des Gehäuses 11 eingesetzte Dichtungsringe 24 abgedichtet, so daß das im wesentlichen entlang der Zentralachse der Anschlußkupplung 10 vom Schlauch 1 her einströmende gasförmige und/oder flüssige Fluid nicht nach außen hin austreten kann.

Von Bedeutung ist weiterhin ein zentral im Kolben 22 gelagertes Rückschlagventil 25, das mittels eines Dichtkegels 26 gegenüber einer inneren Dichtfläche 27 an dem Kolbenaufsatz 22' in geschlossener Stellung abdichtet. Das Rückschlagventil 25 ist hierbei von einer Druckfeder 28 beaufschlagt, die mittels eines Zentriereinsatzes 29 im Kolben 22 befestigt ist, nämlich hier zwischen den beiden miteinander verschraubten Kolbenteilen 22 und 22' geklemmt ist. Durch dieses Rückschlagventil 25 wird sichergestellt, daß in der hier nicht dargestellten abgekuppelten Position bzw. Abreißstellung, sowie bis kurz vor dem Anschluß der Kupplung 10 an den Anschlußnippel 30 das durch den Anschlußadapter 14 zugeführte Fluid auch bei geöffneten Anschlußhahn an der Betankungsstation oder dergleichen nicht ausströmen kann.

Das Rückschlagventil 25 wird, wie hier dargestellt, beim Aufstecken der Anschlußkupplung 10 auf den Anschlußnippel 30 ebenso wie ein symmetrisch angeordneter Dichtkegel 33 geöffnet, wobei letzterer beim Anschließen entlang der Anschlußnippel-Achse eingedrückt wird und hierbei ein dem Anschlußnippel 30 zugeordnetes Rückschlagventil 34 bildet, das mit einem baugleichen Zentriereinsatz und einer Druckfeder ähnlich dem Rückschlagventil 25 aufgebaut ist.

Von besonderer Bedeutung ist hierbei eine am Außenumfang des Kolbens 22 angeordnete Ringkammer 40, in der eine Feder 41, nachfolgend als Druckfeder 41 bezeichnet, angeordnet ist. Die Druckfeder 41 stützt sich hierbei nach links an einem Bund des Gehäuses 11 bzw. des Kolbenaufsatzes 22' ab und wirkt nach rechts auf eine Kolben-Ringfläche 22a am Kolben 22. Wie aus der Darstellung ersichtlich, steht die Ringkammer 40 mit der inneren Fluidpassage über eine Radialbohrung 42 in Verbindung, wodurch das Gehäuse 11 relativ zum Kolben 22 in einer ausgeglichenen oder ausbalancierten Stellung gehalten wird. Die Kolben-Ringfläche 22a wird hierbei von der Druckfeder 41 bis zu dem nach innen abgekröpftem Bereich beim Stößel 20 geschoben, wodurch zugleich ein Anschlag der Verschiebebewegung des Kolbens 22 erreicht wird, insbesondere auch durch eingesetzte Anschlaghülsen 43 und 44, wobei eine zum Lösen der Verriegelung erforderliche, relative Axialbeweglichkeit (entgegen der Anschlußrichtung A) der Bauteile bei ausgeglichener Druckkraft nach beiden Seiten, also eine Relativbewegung des Gehäuses 11 auf dem axial verriegelten Kolben 22/22' ermöglicht wird.

In der Anschlußstellung der Kupplung 10 werden beim Aufstecken auf den Anschlußnippel 30 die beiden Rückschlagventile 25 und 34 miteinander in Berührung gebracht, wobei sich diese je nach Federauslegung im wesentlichen simultan in entgegengesetzte Richtung bewegen. Ebenso gelangt der Dichtbund 23 in Anlage zu der Dichtung 32, wodurch ein Austreten von Fluid, das gegebenenfalls an dem Rückschlagventil 34 des Anschlußnippels 30 ansteht, vermieden wird. Durch die Anlage des Dichtbunds 23 an der Dichtung 32 wird zudem der Kolben 22 nach rechts verschoben, bis die Spannzangen 15 in der Verriegelungshülse 11c aufgenommen und durch die konischen Schrägflächen 21 zusammengehalten bzw. auf dem Anschlußprofil 31 verriegelt werden.

Dabei ist der Kolben 22 im wesentlichen nur durch die Federkraft der (Druck-)Feder 41 nach rechts verschoben, die somit die Ansprechschwellenkraft der Abreißsicherung definiert. Bei dem Ausnahmefall der Abreißbewegung werden durch die auf den Schlauch 1 wirkenden Zugkräfte somit die Gehäuseteile 11a, 11b und 11c des Gehäuses 11 gegen die Federkraft der Druckfeder 41 nach rechts gezogen und damit die Spannzangen 15 aus ihrer Sperrstellung frei, so daß diese mit ihrem Eingriffsprofil 17 an dem korrespondierend ausgebildeten Anschlußprofil 31 des Anschlußnippels 30 außer Eingriff gelangt, nämlich durch die Axialbewegung der Verriegelungshülse 11c und die Freigabe in Radialrichtung entlang der Schrägflächen 21.

Diese Bewegung wird hierbei auch bei sehr hohen Anschlußdrücken von z. B. 100 MPa (1000 bar) nicht behindert, da der Druck im wesentlichen mit gleichem Betrag auf die entgegengesetzt ausgerichteten Ringflächen 22a und 22b wirkt. Es sei darauf hingewiesen, daß dabei die Kolben-Ringflächen 22a und 22b in ihren wirksamen Flächen so dimensioniert sind, daß sich das Gehäuse 11 relativ zum axial durch die Spannzangen 15 verriegelten Kolben 22 (mit zugehörigem Kolbenaufsatz 22') in einer ausgeglichenen "Schwimmstellung" befindet. Hierdurch wird eine Abreißsicherung auch bei steigendem Fluiddruck und damit eine besonders zuverlässige Absicherung der Anschlußkupplung 10 bei allen Druckbereichen erreicht.

Zum Lösen der Anschlußkupplung 10 und damit dem Zurückführen der in Fig. 1 dargestellten Anschlußstellung in die Öffnungsstellung wird die Verriegelungshülse 11c mit der Betätigungsvorrichtung 18 zurückgezogen. Nach einem kurzen Weg können die Spannzangen als bevorzugte Verriegelungselemente 15 (auch Kugeln oder Stifte sind möglich) sich radial nach außen aufspreizen, wobei simultan der Kolben 22 entgegen der Wirkung der Druckfeder 41 hier nach links zum Auslaßende 13 hin verschoben wird. Bevor sich der Dichtkontakt zwischen dem Kolben 22 und der Dichtung 32 löst, wird zudem das bevorzugt vorgesehene Rückschlagventil 25 geschlossen und ebenso auch das Rückschlagventil 34 des Anschlußnippels 30 simultan geschlossen. Durch diese praktisch gleichzeitige Abfolge wird ein sehr schnelles Schließen der Rückschlagventile erreicht, so daß kein Fluidvolumen austreten kann. Diese Gestaltung erlaubt zudem ein sicheres Aufstecken der Anschlußkupplung 10 auf den Anschlußnippel 30, wobei der Dichtkontakt zwischen Dichtung 32 und Dichtbund 23 sichergestellt ist, da die Öffnungsstellung der Spannzangen 15 so lange aufrechterhalten wird, bis von der Axialverschiebung des Kolbens 22 und der hieraus abgeleiteten Mitnahme des Kolbenaufsatzes 22' der Anschluß hergestellt wird.

Von Bedeutung ist weiterhin eine Rückführleitung 60, die am Gehäuse 11 befestigt sind. Die Rückführleitung 60 ist in Anschlußrichtung A zusammen mit der Kupplung 10 an den Anschlußnippel 30 ein- bzw. aufsteckbar, an dem ein Gegenstück 61 mit einer Aufstecklasche 62 befestigt ist (vgl. Fig.2). Wie aus Fig. 1 ersichtlich ist, wird die Aufstecklasche 62 mit dem Gegenstück 61 bevorzugt zwischen zwei Nippelteilen in stabiler Weise fixiert, wodurch sich für den Abreißfall eine sichere Befestigung der Lasche 62 ergibt, jedoch die Rückführleitung 60 leicht aus dem Gegenstück 61 herausziehbar ist.

## Patentansprüche

1. Kupplung mit Abreißsicherung zur Übertragung von gasförmigen und/oder flüssigen Fluiden, insbesondere zum Betanken von Fahrzeugen, umfassend:
- ein rohrförmiges Gehäuse;
- wenigstens ein Verriegelungselement, insbesondere mehrere aufspreizbare Spannzangen mit einem Eingriffsprofil zum Anschluß an einen korrespondierend ausgebildeten Anschlußnippel; und
- einen relativ zum Gehäuse verschiebbaren und festlegbaren Kolben, insbesondere zur Anlage an den Anschlußnippel;
wobei
der Kolben (22, 22') zur Einstellung der Abreißsichemngskraft relativ zum Gehäuse (11, 11a, 11b, 11c) entgegen der Anschlußrichtung (A) von einer Feder (41) beaufschlagt ist, sowie das Gehäuse (11, 11a, 11b, 11c) der Kupplung (10) entgegen der Anschlußrichtung (A) relativ zu dem verriegelten Kolben (22, 22') zum Lösen des Eingriffs des Verriegelungselements (15) verschiebbar gelagert ist und zur Beaufschlagung des Kolbens (22) die Feder (41) in einer Ringkammer (40) mit wenigstens einer Kolben-Ringfläche (22a) angeordnet und als Druckfeder ausgebildet ist,
**dadurch gekennzeichnet, daß**
der Kolben (22, 22') zumindest an der Innenfläche des Gehäuses (11) geführt ist und eine zweite, entgegengesetzt ausgerichtete Ringfläche (22b) aufweist.

2. Kupplung nach Anspruch 1,
**dadurch gekennzeichnet, daß**
zwischen der Fluidpassage des Kolbens (22) und der Ringkammer (40) wenigstens eine Radialbohrung (42) vorgesehen ist.

3. Kupplung nach Anspruch 1,
**dadurch gekennzeichnet, daß**
die Kolben-Ringfläche (22a) in ihrer wirksamen Fläche der Summe der gegenüberliegenden Ringflächen (22b, 27) entspricht, wobei unter Berücksichtigung aller in Anschlußrichtung (A) wirkenden Druckflächen (22b, 27) zur Kolben-Ringfläche (22a) ein zumindest weitgehender Druckkraftausgleich gegeben ist.

4. Kupplung nach einem der Ansprüche 1 bis 3,
**dadurch gekennzeichnet, daß**
in der Ringkammer (40) wenigstens eine Anschlaghülse (43, 44) zur Axialhubbegrenzung angeordnet ist.

5. Kupplung nach einem der Ansprüche 1 bis 4,
**dadurch gekennzeichnet, daß**
im Kolben (22, 22') und im Anschlußnippel (30) einandergegenüberliegend je ein Rückschlagventil (25, 34) angeordnet ist.

6. Kupplung nach einem der Ansprüche 1 bis 5,
**dadurch gekennzeichnet, daß**
entlang dem Gehäuse (11) eine Rückführleitung (60) angeordnet ist, die in Anschlußstellung in ein Gegenstück (61) am Anschlußnippel (30) eingreift, das insbesondere mit einer Aufstecklasche (62) am Anschlußnippel (30) befestigt ist.

7. Kupplung nach einem der Ansprüche 1 bis 6,
**dadurch gekennzeichnet, daß**
die Verriegelungshülse (11c) des Gehäuses (11) gegenüber dem Eingriffsprofil (17) des Verriegelungselements (15) eine Schrägfläche (21) aufweist.

## Claims

1. A coupling with a safety breaking device for transporting gaseous and/or liquid fluids, especially for filling vehicles, comprising:
- a tubular housing;
- at least one locking element, especially a plurality of collet jaws which can spread, with an engagement profile for connection to a correspondingly formed connector nipple; and
- a piston which can slide relative to the housing and be fixed, especially for abutment against the connector nipple;
wherein the piston (22, 22') is biased against the connection direction (A) relative to the housing (11, 11a, 11b, 11c) by a spring (41) to set the safety breaking force and the housing (11, 11a, 11b, 11c) of the coupling (10) is slidably mounted relative to the locked piston (22, 22') against the closing direction (A) to release the engagement of the locking element (15), and
the spring (41) is arranged to act on the piston (22) in an annular chamber (40) with at least one piston annular surface (22a) and is in the form of a compression spring, **characterized in that**
the piston (22, 22') is guided at least on the inner surface of the housing (11) and has a second, oppositely directed annular surface (22b).

2. A coupling according to claim 1, **characterized in that** at least one radial bore (42) is provided between the fluid passage of the piston (22) and the annular chamber (40).

3. A coupling according to claim 1, **characterized in that** the piston annular surface (22a) corresponds in its effective surface to the sum of the opposed annular surfaces (22b, 27), wherein an at least substantial pressure force equalisation is provided taking into account all pressure surfaces (22b, 27) acting in the connection direction (A) relative to the piston annular surface (22a).

4. A coupling according to any of claims 1 to 3, **characterized in that** at least one stop sleeve (43, 44) is arranged in the annular chamber (40) to limit the axial stroke.

5. A coupling according to any of claims 1 to 4, **characterized in that** opposed check valves (25, 34) are arranged in the piston (22, 22') and in the connector nipple (30).

6. A coupling according to any of claims 1 to 5, **characterized in that** a return feed line (60) is arranged along the housing (11) and engages in the connected position in a mating part (61) on the connector nipple (30), which is in particular fixed on the connector nipple (30) by a clip on tab (62).

7. A coupling according to any of claims 1 to 6, **characterized in that** the locking sleeve (11c) of the housing (11) has a bevelled surface (21) opposite the engagement profile (17) of the locking element (15).

## Revendications

1. Coupleur muni d'une sécurité d'arrachement pour le transfert de fluides gazeux et /ou liquides, notamment pour le ravitaillement de véhicules, comprenant : un boîtier en forme de tuyau ; au minimum un élément de verrouillage, notamment plusieurs pinces de serrage pouvant s'écarter avec un profil de prise pour le raccordement à un nipple de raccordement formé de manière correspondante ; et un piston déplaçable et fixable par rapport au boîtier, notamment pour la fixation sur le nipple de raccordement, le piston (22, 22') étant contraint par un ressort (41) à l'inverse du sens de raccordement (A) pour le réglage de la résistance à l'arrachement par rapport au boîtier (11, 11a, 11b, 11c), et le boîtier (11, 11a, 11b, 11c) du coupleur (10) étant placé de manière déplaçable contre le sens de raccordement (A) par rapport au piston verrouillé (22, 22') pour le desserrage de la prise de l'élément de verrouillage (15), et le ressort (41) étant placé, pour la contrainte du piston (22), dans une chambre toroïdale (40) avec au moins une surface annulaire de piston (22a) et étant formé comme ressort à pression, **caractérisé en ce que** le piston (22, 22') est guidé au moins sur la surface intérieure du boîtier (11) et qu'il présente une seconde surface annulaire (22b) dirigée à l'opposé.

2. Coupleur selon la revendication 1, **caractérisé en ce qu**'au moins un alésage radial (42) est prévu entre le passage pour fluides du piston (22) et la chambre toroïdale (40).

3. Coupleur selon la revendication 1, **caractérisé en ce que** la surface annulaire de piston (22a) correspond, dans sa surface effective, à la somme des surfaces annulaires (22b, 27) opposées, un équilibrage ample de l'effort de pression étant donné en prenant en compte toutes les surfaces annulaires (22b, 27) agissant dans le sens de raccordement (A) vers la surface annulaire du piston (22a).

4. Coupleur selon l'une des revendications 1 à 3, **caractérisé en ce qu'**au moins une douille de butée (43, 44) est placée dans la chambre toroïdale (40) pour la limitation du levage axial.

5. Coupleur selon l'une des revendications 1 à 4, **caractérisé en ce qu'**un clapet anti-retour (25, 34) est placé dans le piston (22, 22') et dans le nipple de raccordement (30) à l'opposé l'un de l'autre.

6. Coupleur selon l'une des revendications 1 à 5, **caractérisé en ce qu**'une conduite de retour (60) est placée le long du boîtier (11), conduite qui a prise, en position de raccordement, dans une contre-pièce (61) sur le nipple de raccordement (30), la contre-pièce étant fixée notamment avec un collier de fixation à emboîtement (62) sur le nipple de raccordement (30).

7. Coupleur selon l'une des revendications 1 à 6, **caractérisé en ce que** la douille de verrouillage (11c) du boîtier (11) présente une surface inclinée (21) à l'opposé du profil de prise (17) de l'élément de verrouillage (15).
